# EUROPÄISCHE PATENTSCHRIFT

(11) **EP 1 510 737 B1**
(45) Veröffentlichungstag und Bekanntmachung des Hinweises auf die Patenterteilung: **16.01.2008**
(21) Anmeldenummer: 04011491.0
(22) Anmeldetag: 14.05.2004
(51) Int. Cl.: F16J 15/12, F16L 23/18

(54) **Dichtung, insbesondere Flanschdichtung**
Seal, in particular sealing gasket
Joint d'étanchéité, en particulier joint plat

(30) Priorität: 29.08.2003 DE 20313400 U
(43) Veröffentlichungstag der Anmeldung: 02.03.2005
(73) Patentinhaber: Kroll & Ziller GmbH & Co. KG, 40721 Hilden (DE)
(72) Erfinder: Kowalewski, Ulrich, 41238 Mönchengladbach (DE)
(74) Vertreter: Christophersen & Partner

(56) Entgegenhaltungen:
- EP-A- 1 418 367
- DE-U- 8 200 824
- DE-U- 29 707 063

## Beschreibung

Die Erfindung betrifft eine Dichtung, insbesondere Flanschdichtung, mit einem Dichtring aus Gummi sowie einem von dem Material des Dichtrings zumindest teilweise umschlossenen, starren Ring.

Solche Dichtungen sind in vielfältigen Ausführungsformen bekannt (siehe DE-U-29 707063). Zur gegenseitigen Abdichtung von Rohrflanschen z. B. werden flache Dichtungen verwendet, bestehend aus einem metallischen Stützring und einem daran angeordneten Dichtring aus Gummi oder aus einem thermoplastischen Elastomer, wobei dieser Gummidichtring nach dem Einbau der Dichtung im Kraftnebenfluß der abzudichtenden Flansche liegt. Der häufig als vollständig umschlossener Kern ausgebildete metallische Stützring nimmt die für hohe Drücke erforderlichen Schraubenkräfte auf und schützt gleichzeitig die Gummidichtung vor Überpressung. Hierbei weist der metallische Stützring keinen Kontakt mit dem Medium auf, vielmehr wird er insoweit durch den Dichtring abgeschirmt.

Bekannt sind ferner Flanschdichtungen, bei denen der Stützring aus Stahl teilweise außerhalb des elastischen Dichtrings liegt und eine solche Dicke aufweist, daß der Krafthauptschluß über den starren Stützring erfolgt.

Ausgehend von den vorgenannten Dichtungen und insbesondere Flanschdichtungen liegt der Erfindung die **Aufgabe** zugrunde, eine sichere Flanschverbindung zu schaffen, die sich auch für die Abdichtung von Flüssigkeiten oder Gasen bei Betriebstemperaturen bis ca. 200° C und/oder zum Einsatz bei Betriebsdrücken über 25 bar eignet.

Zur **Lösung** dieser Aufgabe wird bei einer Dichtung mit den eingangs angegebenen Merkmalen vorgeschlagen, daß der Dichtring von radial innen her mit einer Hülle aus PTFE versehen ist, wobei die Hülle einen zugleich den Innenrand der Dichtung bildenden Wulstabschnitt sowie zwei sich von dem Wulstabschnitt nach außen erstreckende Schenkelabschnitte aufweist, und der eine Schenkelabschnitt die obere und der andere Schenkelabschnitt die untere Flachseite des elastischen Dichtrings zumindest teilweise bedeckt.

Eine solche Dichtung nutzt in vorteilhafter Weise die im Apparate- und Rohrleitungsbau wichtige Anpassungsfähigkeit des Werkstoffs Gummi aus. Diese Eigenschaften werden kombiniert mit der sehr guten Chemikalienbeständigkeit und extrem niedrigen Querschnittsleckage des Werkstoffes PTFE (Polytetrafluorethylen). Zu diesem Zweck wird der aus Gummi bestehende Dichtring von radial innen her mit einer Hülle aus PTFE versehen. Diese Hülle setzt sich zusammen aus einem zugleich den Innenrand der Flanschdichtung bildenden Wulstabschnitt sowie zwei sich von dem Wulstabschnitt nach außen erstreckenden Schenkelabschnitten. Der eine dieser beiden Schenkelabschnitte bedeckt zumindest teilweise die obere, und der andere Schenkelabschnitt bedeckt zumindest teilweise die untere Flachseite des Gummidichtrings. Eine mit einer solchen Flanschdichtung versehene Flanschverbindung ist in der Lage, einerseits besonders gut bereits bei niedrigen Flächenpressungen im Bereich von 1 bis 2 N/mm² abzudichten, und andererseits auch hohe axiale Zusatzbelastungen und Rohrbiegemomente aufnehmen zu können, ohne undicht zu werden.

Mit einer Ausgestaltung wird vorgeschlagen, daß die PTFE-Hülle in ihrem Wulstabschnitt vollständig mit PTFE ausgefüllt ist. Auf diese Weise ist der Wulstabschnitt in der Lage, nach Anziehen der Flanschverbindung einen inneren Druck aufzubauen, was die Abdichtung verbessert.

Zur Erzielung einer nochmals verbesserten Abdichtung wird ferner vorgeschlagen, daß die Dicke der PTFE-Hülle in ihrem Wulstabschnitt größer ist, als der Abstand zwischen den Außenseiten der Schenkelabschnitte. Die beim Anziehen der Flanschverbindung zunächst nur auf den im Querschnitt kreisförmigen Wulstabschnitt wirkende Kraft verformt diesen, so daß sich im gesamten radial innenliegenden Bereich der PTFE-Hülle eine Mindestmateriaidicke von ca. 3 mm ergibt, weiche eine Diffusionssperre darstellt.

Gemäß einer weiteren Ausführungsform der erfindungsgemäßen Dichtung ist der starre Ring von dem Material des elastischen Dichtrings vollständig umschlossen, und die Schenkelabschnitte der PTFE-Hülle erstrecken sich gleich weit nach außen, wie der starre Ring.

Mit einer weiteren, einige fertigungstechnische Vorteile aufweisenden Ausgestaltung der Dichtung wird vorgeschlagen, daß der starre Ring von dem Material des elastischen Dichtrings nur an seinem radial innenliegenden Ende umschlossen ist, und daß sich die Schenkelabschnitte der PTFE-Hülle zumindest zum Teil bis über den starren Ring erstrecken.

Eine weitere Ausgestaltung ist gekennzeichnet durch einen Hohlraum in dem Wulstabschnitt, wobei der Hohlraum nach radial außen hin durch den Innenrand des elastischen Dichtrings begrenzt ist. Auf diese Weise ist dem elastischen Dichtring unter Drucklast eine gewisse Verbreiterung seines Querschnittes möglich, ohne daß sich eine solche Formänderung negativ auf den Sitz der PTFE-Hülle auf dem elastischen Dichtring auswirkt.

Ferner wird vorgeschlagen, daß, außer im Bereich des Hohlraums, die Innenkontur der PTFE-Hülle an die Gestalt der Flachseiten des Dichtrings angepaßt ist.

In besonders vorteilhafter Ausgestaltung besteht der starre Ring aus Metall.

Weitere Einzelheiten und Vorteile ergeben sich aus der nachfolgenden Beschreibung eines Ausführungsbeispiels einer Rohrflanschdichtung. Auf der Zeichnung zeigen:
- Fig. 1: in einem Halbschnitt zwei zueinander beabstandete Rohrflansche mit einer dazwischen angeordneten Flanschdichtung,
- Fig. 2: in vergrößerter Darstellung einen Schnitt durch die Flanschdichtung,
- Fig. 3: in vergrößerter Darstellung einen Schnitt durch eine zweite Ausführungsform einer erfindungsgemäßen Flanschdichtung und
- Fig. 4: in vergrößerter Darstellung eine PTFE-Hülle gemäß Fig. 3.

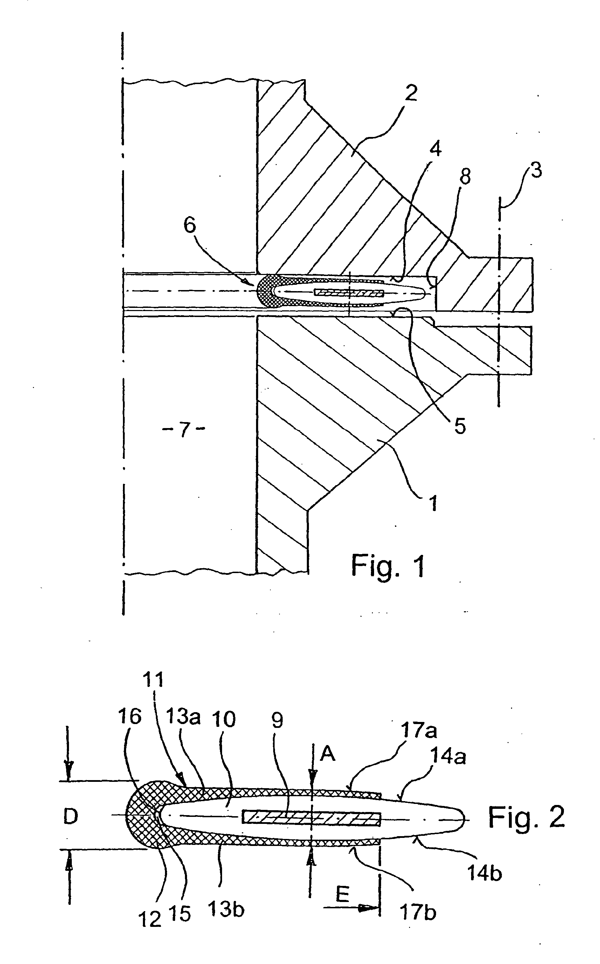

Fig. 1 zeigt in einer hälftigen Schnittdarstellung zwei miteinander zu verbindende Rohrflansche 1, 2 einer Leitung für den Transport von Flüssigkeiten oder Gasen. Über druckfeste Verschraubungen 3, von denen nur die Mittellinien auf der Zeichnung dargestellt sind, sind die Rohrflansche 1, 2 verbindbar. In den einen Rohrflansch 1 ist eine Dichtung 6 eingesetzt, die, sobald die Verschraubung 3 angezogen wird, zwischen den zueinander parallelen Flanschflächen 4, 5 der Rohrflansche 1, 2 gepreßt wird.

Mit ihrem Außenumfang kann die Dichtung 6 in einer entsprechenden Bohrung 8 des einen Rohrflansches zentriert sein. Der Innenumfang der Dichtung 6 umgibt und begrenzt unmittelbar den Strömungskanal 7.

In der Fig. 2 sind Einzelheiten der Dichtung 6 dargestellt. Diese ist insgesamt ringförmig und im wesentlichen flach gestaltet und besteht aus insgesamt drei Elementen, nämlich einem starren Ring 9, einem Dichtring 10 sowie einer Hülle 11, mit der der Dichtring 10 von radial innen her versehen ist. Der starre Ring 9 ist aus Metall gefertigt und wird daher nachfolgend lediglich beispielhaft als Metallring 9 bezeichnet. Es versteht sich, daß außer Metall auch nicht metallische Werkstoffe wie beispielsweise glasfaserverstärkte Kunststoffe verwendet werden können.

Bei dem dargestellten Ausführungsbeispiel ist der vorzugsweise aus Stahl bestehende Metallring 9 vollständig in das elastische Material des Dichtrings 10 eingebettet. Das Material des den Querschnitt einer sehr flachen Ellipse aufweisenden Dichtrings 10 ist Gummi. Gummi zeichnet sich durch verschiedene, gerade für den vorliegenden Einsatzzweck besonders vorteilhafte Eigenschaften aus:
a) Gummi paßt sich den Unebenheiten und Rauhigkeiten der Oberfläche 4, 5 der Flansche sehr gut an.
b) Gummi zeichnet sich durch eine äußerst niedrige Querschnittsleckage aus, da die Durchlässigkeit z. B. für die meisten Gasmedien sehr gering ist.
c) Gummi erfordert nur geringe Anfangsdichtkräfte wegen der Mindestflächenpressung von 1 bis 2 N/mm².
d) Die allgemeine Chemikalien beständigkeit ist gut, weniger gut ist lediglich die Beständigkeit gegenüber Lösungsmitteln.

Der Dichtring 10 ist von radial innen her mit der Hülle 11 aus PTFE (Polytetrafluorethylen) versehen. Die nach Art eines Profils gestaltete Hülle 11 ist innenliegend mit einem Wulstabschnitt 12 versehen, der zugleich den Innenrand der Dichtung 6 bildet. In dem Wulstabschnitt 12 ist dessen gesamter Querschnitt mit PTFE ausgefüllt, wodurch der Wulst bei Druckbelastung eine gewisse innere Spannung aufbaut.

Von dem Wulstabschnitt 12 gehen zwei Schenkelabschnitte 13 a, 13 b aus, die einstückig zu dem Wulstabschnitt 12 sind. Der obere Schenkelabschnitt 13 a erstreckt sich entlang der oberen Flachseite 14 a des Dichtrings 10, der untere Schenkelabschnitt 13 b erstreckt sich entlang der unteren Flachseite 14 b des Dichtrings 10. Hierbei nehmen die Schenkelabschnitte 13 a, 13 b die allenfalls geringe Krümmung der oberen bzw. unteren Flachseite 14 a, 14 b des Dichtrings auf, d. h. die Innenkontur der PTFE-Hülle 11 ist an die Gestalt dieser Flachseiten 14 a, 14 b angepaßt.

Fig. 2 läßt ferner einen kleinen Hohlraum 15 innerhalb des Wulstabschnitts 12 erkennen. Dieser Hohlraum 15 ist einerseits durch die Innenwandung des Wulstabschnitts 12 begrenzt, und andererseits, nämlich nach radial außen hin, durch den Innenrand 16 des Gummi-Dichtrings 10. Die beiden Schenkelabschnitte 13 a, 13 b der PTFE-Hülle 11 erstrecken sich, wie Fig. 2 ebenfalls erkennen läßt, gleich weit nach außen hin, wie der Metallring 9. Das Maß dieser Erstreckung ist in Fig. 2 mit "E" bezeichnet.

Wird die Dichtung innerhalb der Rohrflanschverbindung gepreßt, führt dies zu einer Stauchung des aus Gummi bestehenden Dichtrings 10. Hierdurch neigt dieser dazu, zugleich in seiner Breite zuzunehmen. Zum Volumenausgleich dient der in dem Wulstabschnitt 12 enthaltene Hohlraum 15.

Die Dicke D des Wulstabschnitts 12 ist größer, als der Abstand A zwischen den einander abgewandten Außenseiten 17 a, 17 b der Schenkelabschnitte 13 a bzw. 13 b.

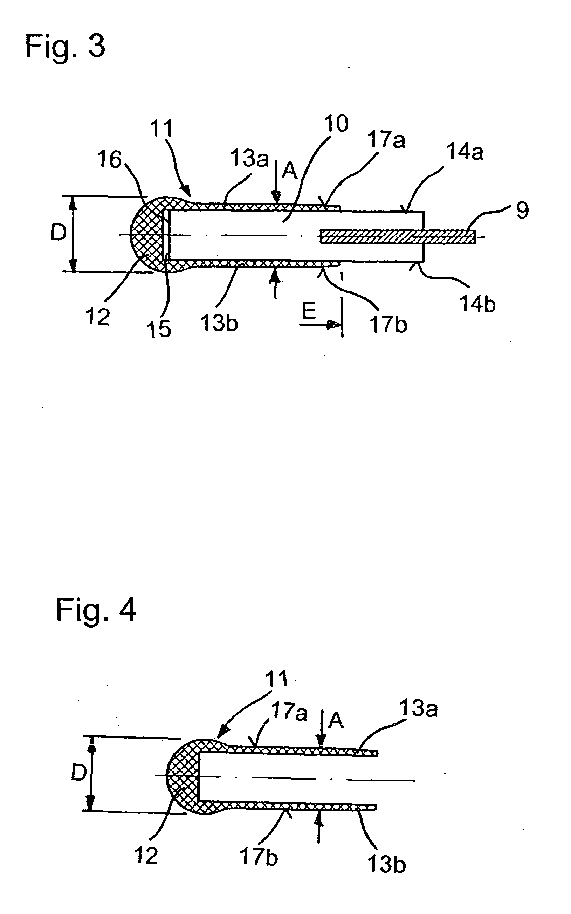

In den Figuren 3 und 4 ist eine weitere Ausführungsform einer erfindungsgemäßen Dichtung dargestellt, bei welcher gleiche Teile mit jeweils identischen Bezugszeichen versehen sind. Anders als bei der in den Figuren 1 und 2 dargestellten Ausführungsform, ist der Dichtring 6 mit einem starren Metallring 9 versehen, der von dem Material des Dichtrings 10 hier nur teilweise umschlossen ist. Im radial außen liegenden Bereich der Dichtung 6 steht der starre Metallring 9 über den äußeren Rand des aus Gummi oder einem thermoplastischen Elastomer gefertigten und einen rechteckigen Querschnitt aufweisenden Dichtrings 10 hervor.

Die äußere Kontur der PTFE-Hülle ist im wesentlichen gleich der in den Figuren 1 und 2 dargestellten Hülle, die innere Kontur der PTFE-Hülle ist an die Gestalt der hier eben gestalteten Flachseiten 14a, 14b des Dichtrings 10 angepaßt.

Die beiden Schenkelabschnitte 13a, 13b der PTFE-Hülle erstrecken sich, wie Fig. 3 erkennen läßt, nach radial innen bis zumindest teilweise über den Metallring 9, um so die Gummidichtung vor Überpressung schützen zu können.

Diese Ausgestaltung der Dichtung ist mit einfachen, an sich bekannten fertigungstechnischen Mitteln herstellbar. Nachdem die PTFE-Hülle 11 innenseitig durch naßchemisches Ätzen, Plasmaätzen o.ä. zur Steigerung der Haftwirkung aufgerauht wurde, kann dann der Dichtring 10 unter Ausformung einer umlaufenden Aufnahmeöffnung für den Metallring 9 nach üblichen Verfahren der Spritzgußtechnik einfach eingespritzt werden. Der Metallring 9 wird anschließend in die umlaufende Ausnehmung des Dichtrings 10 außenseitig eingeschoben. Dabei kann der Dichtring beispielsweise aus zwei Ringhälften bestehen, die erst in in den Dichtring 10 eingeschobener Stellung durch z.B. eine Punktschweißung miteinander verbunden werden.

### Bezugszeichenliste

- 1: Rohrflansch
- 2: Rohrflansch
- 3: Verschraubung
- 4: Flanschfläche
- 5: Flanschfläche
- 6: Dichtung
- 7: Strömungskanal
- 8: Bohrung
- 9: Metallring
- 10: Dichtring
- 11: Hülle aus PTFE
- 12: Wulstabschnitt
- 13a: Schenkelabschnitt
- 13 b: Schenkelabschnitt
- 14 a: Flachseite
- 14 b: Flachseite
- 15: Hohlraum
- 16: Innenrand des Dichtrings
- 17 a: Außenseite
- 17 b: Außenseite

- A: Abstand
- D: Dicke
- E: radiale Erstreckung

## Patentansprüche

1. Dichtung, insbesondere Flanschdichtung, mit einem Dichtring (10) aus Gummi sowie einem von dem Material des Dichtrings (10) zumindest teilweise umschlossenen, starren Ring (9), wobei der Dichtring (10) von radial innen her mit einer Hülle (11) aus PTFE versehen ist, wobei die Hülle (11) einen zugleich den Innenrand der Dichtung bildenden Wulstabschnitt (12) sowie zwei sich von dem Wulstabschnitt (12) nach außen erstreckende Schenkelabschnitte (13 a, 13 b) aufweist, und der eine Schenkelabschnitt (13 a) die obere und der andere Schenkelabschnitt (13 b) die untere Flachseite (14 a bzw. 14 b) des elastischen Dichtrings (10) zumindest teilweise bedeckt,
**dadurch gekennzeichnet,**
**daß** in dem Wulstabschnitt (12) der gesamte Querschnitt der PTFE-Hülle (11) mit PTFE ausgefüllt ist.

2. Dichtung nach Anspruch 1, **dadurch gekennzeichnet, daß** die Dicke (D) der PTFE-Hülle (11) in ihrem Wulstabschnitt (12) größer ist, als der Abstand (A) zwischen den Außenseiten (17 a, 17 b) der Schenkelabschnitte (13 a, 13 b).

3. Dichtung nach Anspruch 1, **dadurch gekennzeichnet, daß** der starre Ring (9) von dem Material des elastischen Dichtrings (10) vollständig umschlossen ist, und daß sich die Schenkelabschnitte (13 a, 13 b) der PTFE-Hülle (11) gleich weit nach außen erstrecken, wie der starre Ring (9).

4. Dichtung nach Anspruch 1, **dadurch gekennzeichnet, daß** der starre Ring (9) von dem Material des elastischen Dichtrings (10) nur an seinem radial innenliegenden Ende umschlossen ist, und daß sich die Schenkelabschnitte (13 a, 13 b) der PTFE-Hülle zumindest zum Teil bis über den starren Ring (9) erstrecken.

5. Dichtung nach einem der vorangehenden Ansprüche, **gekennzeichnet durch** einen Hohlraum (15) in dem Wulstabschnitt (12), wobei der Hohlraum (15) nach radial außen hin durch den Innenrand (16) des elastischen Dichtrings (10) begrenzt ist.

6. Dichtung nach Anspruch 5, **dadurch gekennzeichnet, daß,** außer im Bereich des Hohlraums (15), die Innenkontur der PTFE-Hülle (11) an die Gestalt der Flachseiten (14 a, 14 b) des Dichtrings (10) angepaßt ist.

7. Dichtung nach einem der vorangehenden Ansprüche, **dadurch gekennzeichnet, daß** der starre Ring (9) aus Metall besteht.

## Claims

1. A seal, in particular a flange seal, comprising a sealing ring (10) made of rubber and a rigid ring (9) which is at least partially enclosed by the material of the sealing ring (10), wherein the sealing ring (10) is provided from radially inwards with a sheath (11) made of PTFE, wherein the sheath (11) has a bead section (12), which at the same time forms the inner edge of the seal, and also two leg sections (13a, 13b) which extend outwards from the bead section (12), and one leg section (13a) at least partially covers the upper flat side (14a) and the other leg section (13b) at least partially covers the lower flat side (14b) of the elastic sealing ring (10), **characterised in that** the entire cross section of the PTFE sheath (11) is filled with PTFE in the bead section (12).

2. A seal according to claim 1, **characterised in that** the thickness (D) of the PTFE sheath (11) in its bead section (12) is greater than the distance (A) between the outer sides (17a, 17b) of the leg sections (13a, 13b).

3. A seal according to claim 1, **characterised in that** the rigid ring (9) is completely enclosed by the material of the elastic sealing ring (10), and **in that** the leg sections (13a, 13b) of the PTFE sheath (11) extend outwards to the same distance as the rigid ring (9).

4. A seal according to claim 1, **characterised in that** the rigid ring (9) is enclosed by the material of the elastic sealing ring (10) only at its radially inner end, and **in that** the leg sections (13a, 13b) of the PTFE sheath extend at least partly beyond the rigid ring (9).

5. A seal according to one of the preceding claims, **characterised by** a cavity (15) in the bead section (12), wherein the cavity (15) is delimited in the radially outward direction by the inner edge (16) of the elastic sealing ring (10).

6. A seal according to claim 5, **characterised in that**, except in the region of the cavity (15), the inner contour of the PTFE sheath (11) matches the shape of the flat sides (14a, 14b) of the sealing ring (10).

7. A seal according to one of the preceding claims, **characterised in that** the rigid ring (9) is made of metal.

## Revendications

1. Joint, en particulier joint à bride, comprenant une bague d'étanchéité (10) en caoutchouc et une bague (9) rigide, enfermée au moins partiellement par le matériau de la bague d'étanchéité (10), la bague d'étanchéité (10) étant dotée par l'intérieur radialement d'une enveloppe (11) en polytétrafluoréthylène, l'enveloppe (11) présentant une partie de renflement (12) fermant en même temps le bord intérieur du joint et des parties de branche (13a, 13b) s'étendant depuis la partie de renflement (12) vers l'extérieur, et l'une des parties de branche (13a) recouvrant au moins partiellement le côté supérieur (14a) et l'autre partie de branche (13b) le côté plat inférieur (14b) de la bague d'étanchéité (10) élastique,
**caractérisé en ce que**
l'ensemble de la section de l'enveloppe en polytétrafluoréthylène (11) est rempli de polytétrafluoréthylène dans la partie de renflement (12).

2. Joint selon la revendication 1, **caractérisé en ce que** l'épaisseur (D) de l'enveloppe en polytétrafluoréthylène (11) dans sa partie de renflement (12) est supérieure à l'espacement (A) entre les côtés extérieurs (17a, 17b) des parties de branche (13a, 13b).

3. Joint, selon la revendication 1, **caractérisé en ce que** la bague (9) rigide est complètement entourée par le matériau de la bague d'étanchéité (10) élastique, et **en ce que** les parties de branche (13a, 13b) de l'enveloppe en polytétrafluoréthylène (11) s'étendent vers l'extérieur aussi loin que la bague (9) rigide.

4. Joint selon la revendication 1, **caractérisé en ce que** la bague (9) rigide est entourée par le matériau de la bague d'étanchéité (10) élastique uniquement sur son extrémité radialement intérieure, et **en ce que** les parties de branche (13a, 13b) de l'enveloppe en polytétrafluoréthylène s'étendent au moins en partie jusque sur la bague (9) rigide.

5. Joint selon l'une quelconque des revendications précédentes, **caractérisé par** une cavité (15) dans la partie de renflement (12), la cavité (15) étant limitée vers l'extérieur radialement par le bord intérieur (16) de la bague d'étanchéité (10) élastique.

6. Joint selon la revendication 5, **caractérisé en ce que** le contour intérieur de l'enveloppe en polytétrafluoréthylène (11) est adapté à la forme des côtés plats (14a, 14b) de la bague d'étanchéité (10), sauf dans la zone de la cavité (15).

7. Joint selon l'une quelconque des revendications précédentes, **caractérisé en ce que** la bague (9) rigide est en métal.
